(19) Europäisches Patentamt
European Patent Office
Office européen des brevets

(11) Veröffentlichungsnummer : **0 025 601**
**B1**

(12) # EUROPÄISCHE PATENTSCHRIFT

(45) Veröffentlichungstag der Patentschrift : **16.02.83**

(51) Int. Cl.³ : **C 09 H 3/00**, A 23 J 1/10

(21) Anmeldenummer : **80105466.9**

(22) Anmeldetag : **12.09.80**

(54) **Neue Gelatinen, Verfahren zu ihrer Herstellung und ihre Verwendung.**

(30) Priorität : **17.09.79 CH 8382/79**

(43) Veröffentlichungstag der Anmeldung : **25.03.81 Patentblatt 81/12**

(45) Bekanntmachung des Hinweises auf die Patenterteilung : **16.02.83 Patentblatt 83/07**

(84) Benannte Vertragsstaaten : **BE CH DE FR GB IT LI NL SE**

(56) Entgegenhaltungen :
**DE C 344 238**
**FR A 2 369 802**
**US A 3 628 974**
**P. GIAFKIDES : « Chimie et Physique photographiques » Montel Paris 4 ed. 1976. Seite 413, Absatz 355**

(73) Patentinhaber : **CIBA-GEIGY AG**
**Patentabteilung Postfach**
**CH-4002 Basel (CH)**

(72) Erfinder : **Tomka, Ivan, Dr.**
**Chalet Breitfeld**
**CH-1722 Bourguillon (CH)**

(74) Vertreter : **Berg, Wilhelm, Dr. et al**
**Dr. Berg, Dipl.-Ing. Stapf, Dipl.-Ing. Schwabe, Dr. Dr. Sandmair Mauerkircherstrasse 45**
**D-8000 München 80 (DE)**

**EP 0 025 601 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Neue Gelatinen, Verfahren zur ihrer Herstellung und ihre Verwendung

Die vorliegende Erfindung betrifft neue Gelatinen, die man erhält, wenn man wässrige Gelatinelösungen der Einwirkung mechanischer Scherkräfte unterwirft und die Verwendung dieser Gelatinen als Bindemittel in photographischen Materialien.

Photographische Materialien bestehen in der Regel aus einer flächigen Unterlage, auf welche mindestens eine, in der Regel jedoch mehrere dünne Schichten aufgetragen sind. Mindestens eine dieser Schichten ist lichtempfindlich; weitere, gegebenenfalls nicht lichtempfindliche Schichten erfüllen verschiedene Hilfsfunktionen als z. B. Schutz-, Filter- oder Antihaloschichten.

Abgesehen von speziellen Fällen, wie z. B. aufgedampften Schichten, wird für die Herstellung von photographischen Schichten stets ein Bindemittel benötigt, welches die nötige Kohäsion und Adhäsion vermittelt. Bei konventionellen photographischen Materialien, welche im Anschluss an die Belichtung mit wässerigen Lösungen verarbeitet werden, bevorzugt man ein hydrophiles, in Wasser quellbares Bindemittel. Als solches eignet sich insbesondere die Gelatine, die wegen ihrer einzigartigen Eigenschaften für diesen Zweck optimal geeignet ist. Dabei spielen vor allem die folgenden Eigenschaften eine wichtige Rolle:

— Chemische Eigenschaften der Gelatine selbst und ihrer natürlichen Begleitstoffe, welche die Herstellung von Silberhalogenidschichten mit besonders hoher Lichtempfindlichkeit gestatten;

— günstige Eigenschaften als Schutzkolloid, welche die Herstellung und Stabilisierung feindisperser Emulsionen und Dispersionen, insbesondere von Silberhalogeniden gestatten;

— Quellbarkeit und Vernetzbarkeit, welche eine gute Permeabilität für wässerige Lösungen und gleichzeitig gute mechanische Festigkeit vermitteln;

— Physikalische Eigenschaften, welche den Auftrag und das nachträgliche Trocknen von gleichmässigen dünnen Schichten begünstigen.

Gelatine besitzt zudem eine gute Variationsfähigkeit in Bezug auf ihre chemischen und physikalischen Eigenschaften, die sie zur Herstellung eines sehr breiten Spektrums von photographischen Materialien mit verschiedensten Anforderungen geeignet macht. Durch geeignete Auswahl der Rohmaterialien und der Verarbeitungstechnologie können die Eigenschaften der Gelatine dem jeweiligen Verwendungszweck weitgehend angepasst werden. Dies betrifft sowohl die chemischen als auch die physikalischen Eigenschaften der Gelatine.

Immerhin bestehen nach dem heute bekannten Stand der Technik immer noch gewisse Lücken, die es bisher nicht ermöglicht haben, bestimmte Merkmale gleichzeitig in einer Gelatinesorte zu vereinigen. Eine dieser Lücken betrifft die unabhängige Beeinflussung von Viskosität und Erstarrungsgeschwindigkeit der wässerigen Gelatinelösungen.

Die Viskosität von Lösungen hochmolekularer Stoffe ist im allgemeinen bekanntlich eine eindeutige Funktion des Molekulargewichts: Je höher das Molekulargewicht des gelösten Stoffes, desto höher ist die Viskosität der Lösung. Anderseits ist jedoch auch die Erstarrungsgeschwindigkeit von Gelatinelösungen teilweise eine Funktion des Molekulargewichts, und es ist bisher nicht gelungen, die beiden Eigenschaften voneinander unabhängig zu beeinflussen. Durch besondere Massnahmen bei der Wahl der Rohstoffe und ihrer Verarbeitung gelang es bisher zwar ohne weiteres, Gelatinen mit wahlweise hoher oder niedriger Viskosität herzustellen. Stets war jedoch hohe Viskosität mit hoher Erstarrungsgeschwindigkeit, niedrige Viskosität dagegen mit niedriger Erstarrungsgeschwindigkeit verbunden.

Wässerige Gelatinelösungen sind bekanntlich nur bei höheren Temperaturen flüssig. Unterhalb von etwa 30 °C erstarren sie innert kürzerer oder längerer Zeit zu einem elastischen Gel. Eine Ausnahme machen nur sehr verdünnte Lösungen mit einer Konzentration von weniger als etwa 1 %, die bei allen Temperaturen flüssig bleiben. Die Fähigkeit, zu einem nichtfliessenden Gel zu erstarren, ist ein wichtiges Merkmal, welches die Herstellung und Trocknung von präzisen dünnen Schichten sehr erleichtert, wenn nicht überhaupt erst ermöglicht.

Der Auftrag der photographischen Schichten auf die Unterlage erfolgt stets in flüssigem Zustand, wobei oftmals sogar mehrere flüssige Schichten gleichzeitig aufgebracht werden. Die Schichten müssen anschliessend getrocknet werden. Dies erfolgt am schnellsten und zweckmässigsten durch Aufblasen von warmer Luft. Da es nicht möglich ist, ein Material mit ungetrockneten Schichten aufzuwickeln, müssen Schichtauftrag und Trocknung stets in einem Durchgang kontinuierlich erfolgen. Beim Trocknungsvorgang ist es wesentlich, dass die mit hoher Präzision aufgegossenen Schichten weder durch die Schwerkraft noch durch die sich bewegende warme Luft deformiert werden. Diese Forderung kann bei gelatinehaltigen Schichten in besonders einfacher Weise dadurch erfüllt werden, dass man die Schichten vor Beginn des Trocknungsvorgangs möglichst rasch zu einem Gel erstarren lässt, indem man den beschichteten Träger durch eine Kühlstrecke leitet. Je rascher nun die Erstarrung der Schicht erfolgt, desto geringer wird der technische Aufwand für die Kühlstrecke und desto höher kann auch die Durchlaufgeschwindigkeit gewählt werden. Eine allgemeine Beschreibung der Beschichtungs- und Trocknungstechnologie photographischer Materialien findet sich z. B. in B.M. Deryagin et al. « Film Coating Theory », Focal Press 1964.

Die Erstarrungsgeschwindigkeit von Gelatinelösungen ist im allgemeinen konzentrations- und temperaturabhängig. Sie kann durch Erhöhung der Gelatinekonzentration in der Beschichtungslösung

verbessert werden. Einer solchen Arbeitsweise sind aber von der Beschichtungstechnik gewisse Grenzen gesetzt, die nicht überschritten werden können. Auch kolloidchemisch sind allzu konzentrierte Giesslösungen oft instabil und können z. B. zu Entmischungen oder zum Ausflocken einzelner Komponenten neigen.

Es ist deshalb in der Begiesstechnologie erwünscht, Gelatinen zur Verfügung zu haben, die schon bei relativ niedrigen Konzentrationen eine hohe Erstarrungsgeschwindigkeit besitzen. Die Viskosität der Giesslösungen soll dabei unabhängig von der Erstarrungsgeschwindigkeit den jeweiligen Bedürfnissen angepasst werden können. Die Viskositäten der in der photographischen Begiesstechnik verwendeten Lösungen liegen je nach der angewandten Giesstechnik, sowie je nach der Dicke der aufzutragenden Schichten und der Auftragsgeschwindigkeit etwa zwischen 3 und 100 cP. Höchstens ausnahmsweise, wenn besondere Verhältnisse dies erfordern, und mit bestimmten Begiesstechniken, wie etwa dem in DE-B-1 928 025 und DE-B-1 928 031 beschriebenen Vorhanggiessverfahren, sind auch noch höhere Viskositäten bis mehrere hundert cP zulässig. Die Gelatinekonzentration der Giesslösungen muss bei den angegebenen Viskositätswerten zwischen etwa 3 und 12 % liegen. Dabei ist noch zu beachten, dass gewisse, in der photographischen Technologie häufig verwendete Schichtzusätze, wie z. B. anionaktive Netzmittel und gewisse Klassen von Farbstoffen und Farbkupplern, die Viskosität der Lösungen stark erhöhen können. Man war deshalb bisher oftmals gezwungen, mit relativ niedrigen Gelatinekonzentrationen zu arbeiten und damit eine lange Erstarrungszeit in Kauf zu nehmen (1 cP = 1m Pa · s).

Gelatine ist normalerweise ein ziemlich heterogenes Gemisch von Polypeptiden mit weit streuendem Molekulargewichtsbereich. Die für die Gelatineherstellung verwendeten Rohmaterialien Haut und demineralisierte Tierknochen (Ossein) enthalten als wichtigsten Bestandteil das Tropokollagen, ein wohldefiniertes Makromolekül bestehend aus drei miteinander verknüpften Polypeptidketten (zwei $\alpha_1$-Ketten und einer $\alpha_2$-Kette), deren Aufbau und Aminosäuresequenz genau bekannt sind. Bei der Gelatineherstellung wird das Rohmaterial sauer oder alkalisch aufgeschlossen, wobei die Makromoleküle je nach Behandlungsmethode und -dauer in verschiedener Art aufgespalten werden. Die Gesamtheit der Spaltprodukte bildet schliesslich die Gelatine. Sie wird aus der aufgeschlossenen Masse durch Extraktion mit warmem Wasser, Eindampfen der Lösung und Trocknung des Rückstands gewonnen. Siehe dazu z. B. G.A. Wards & A. Courts : « The Science and Technology of Gelatin », Academic Press 1977.

Gelatine kann nach verschiedenen Methoden in eine Vielzahl von Fraktionen von einheitlichem Molekulargewicht aufgetrennt werden. Siehe hierzu z. B. I. Tomka et al. J. Phot. sci. 23, 97 (1975). Als Hauptbestandteile unterscheidet man die vier folgenden Fraktionen, die je nach Herkunft der Gelatine in verschiedenen Mengenverhältnissen vorliegen :

1. α-Gelatine : Intakte α-Polypeptidketten
   0 Molekulargewicht $9{,}5 \cdot 10^4$
2. Oligomere der α-Kette, bestehend aus 2-15 verknüpften α-Ketten
   0 Molekulargewicht $10^5$-$10^6$
3. « Mikrogel » : Polymere von bis zu 1000 verknüpften α-Ketten
   0 Molekulargewicht $10^7$-$10^8$
4. « Peptide » : Verschieden grosse Spaltstücke der α-Kette
   0 Molekulargewicht $1\text{-}9 \cdot 10^4$

Siehe dazu z. B. A. Weis, « The Macromolecular Chemistry of Gelatin », Academic Press 1978, ferner I. Tomka, Chimia 30, 534 ff. (1976 No. 12)

Es hat sich inzwischen gezeigt, dass die vier Hauptfraktionen der Gelatine deren physikalische Eigenschaften und Verwendbarkeit in ganz unterschiedlicher Art bestimmen :

Wertvollster Bestandteil sind die α-Fraktion und deren Oligomere bis zu einer Grösse von etwa 10-15 α-Einheiten. Sie bestimmen weitgehend die Erstarrungseigenschaften der Gelatinelösungen. Lösungen dieser Fraktionen besitzen wegen des nach oben begrenzten Molekulargewichts eine niedrige bis mittlere Viskosität, wie sie für die Herstellung photographischer Schichten am meisten erwünscht ist.

Die als « Mikrogel » bezeichnete Fraktion mit höchstem Molekulargewicht trägt erfahrungsgemäss wegen ihres ohnehin geringen Anteils nicht viel zur Netzstruktur der gelierten Gelatine bei und beeinflusst deswegen die Erstarrungsgeschwindigkeit nur in verhältnismässig geringem Ausmass. Wegen ihres teilweise extrem hohen Molekulargewichts ist diese Fraktion jedoch in starkem Masse für die Viskosität der wässerigen Gelatinelösungen bestimmend. Ein hoher Anteil an Mikrogel ist deshalb in vielen Fällen unerwünscht, weil er die begiesstechnischen Eigenschaften in ungünstiger Weise beeinflusst.

Die Fraktion der Peptide, d. h. der Spaltstücke der α-Gelatine ist — in Bezug auf die physikalischen Eigenschaften — der am wenigsten wertvolle Bestandteil der Gelatine. Peptide entstehen beim Aufschluss des Gelatine-Rohmaterials durch Verseifung von Peptidbindungen innerhalb der α-Kette. Sie bilden einen unerwünschten Bestandteil der Gelatine. Es hat sich nämlich gezeigt, dass die Peptide am Aufbau des Netzwerks nicht teilnehmen, sondern weitgehend in Solform verbleiben. Sie schwächen damit die Netzstruktur und verzögern die Gelbildung. Gelatinen mit einem grossen Anteil an Peptiden erstarren deshalb nur langsam.

Versucht man andererseits, durch besonders schonende Aufschlussbedingungen die Peptidbildung zu unterdrücken, so erhält man eine Gelatine, die einen hohen Anteil an Mikrogelfraktion und damit entsprechend hohe Viskosität besitzt.

Die Aufgabe der vorliegenden Erfindung ist es nun, Gelatinen herzustellen, die eine hohe Erstarrungsgeschwindigkeit besitzen und deren Viskosität beliebig zwischen niedrigen und hohen Viskositätswerten eingestellt werden kann.

Die erfindungsgemässe Aufgabe besteht also insbesondere darin, Gelatinen mit hoher Erstarrungsgeschwindigkeit (und damit naturgemäss hoher Viskosität) so zu verändern, dass man Gelatinen mit beliebig erniedrigter Viskosität erhält, ohne jedoch gleichzeitig die erwünscht hohen Erstarrungsgeschwindigkeiten zu verändern. Die gestellte Aufgabe kann dadurch gelöst werden, dass man den Anteil der Mikrogelfraktion erniedrigt, ohne dass gleichzeitig der Anteil der Peptidfraktion wesentlich erhöht wird. Dies kann durch selektive physikalische Behandlung bestimmter Gelatinefraktionen erreicht werden.

Es wurde nun gefunden, dass die Mikrogelfraktion in einfacher Weise zu einzelnen α-Ketten oder deren aus wenigen Ketten bestehenden Oligomeren gespalten werden kann, ohne dass gleichzeitig eine weitere Spaltung zu niedermolekularen Peptiden stattfindet, wenn man wässerige Gelatinelösungen während einiger Zeit hohen Scherkräften unterwirft.

Gegenstand der vorliegenden Erfindung ist damit ein Verfahren zur Herstellung von Gelatine mit hoher Erstarrungsgeschwindigkeit und erniedrigter Viskosität durch Reduktion ihres Mikrogelgehalts ohne gleichzeitige wesentliche Erhöhung ihres Peptidgehalts, dadurch gekennzeichnet, dass man eine wässrige Gelatinelösung der Einwirkung mechanischer Scherkräfte unterwirft, wobei die Scherspannung zwischen $10^4$ und $10^8$ Pascal liegt.

Die angegebenen Scherspannungen, die die erfindungsgemäss notwendigen Scherkräfte erzeugen, liegen in der Regel zwischen $10^4$ und $10^8$ Pa (Pascal), vorzugsweise zwischen $10^5$ und $10^7$ Pa. Derartig hohe Scherspannungen können in bekannter Weise mittels Hochdruckhomogenisatoren, Kolloidmühlen, Stiftmühlen, Knetmaschinen oder z. B. auch mittels Ultraschall erreicht werden.

Die zur Erzeugung der angegebenen Scherspannungen notwendigen Scherraten (Geschwindigkeitsgefälle) liegen je nach der verwendeten Apparatur und der Viskosität der zu behandelnden Gelatinelösung innerhalb sehr weiter Grenzen, z. B. zwischen etwa 100 Sekunden$^{-1}$ bei einer Knetmaschine und $10^8$-$10^9$ Sekunden$^{-1}$ bei einem Homogenisierapparat mit sehr engem Durchtrittsspalt. Die Viskosität der zu behandelnden Gelatinelösung liegt etwa zwischen $10^5$ und $10^7$ cP (Centipoise) (1 cP = $10^{-3}$ Pascal · Sekunden) im ersten Fall und 1 bis 10 cP im zweiten Fall.

Glafkides (Photographic Chemistry, Vol. I, p. 278, Fountain Press, London) gibt an, dass die Einwirkung von Ultraschall auf Gelatine bis zur Zerstörung unter Bildung von Ammoniak und Aldehyden führen kann, wobei sowohl die Viskosität sinkt als auch die Gelierungsfähigkeit verloren geht. Demgegenüber wurde überraschenderweise gefunden, dass durch Ultraschall oder auch durch andere Behandlung mit hohen Scherkräften bevorzugt die Bindungsstellen zwischen den einzelnen α-Ketten getrennt werden, während die Peptidbindungen innerhalb der α-Ketten intakt bleiben. Es gelingt damit, durch eine rein physikalische Einwirkung, den Gehalt einer Gelatine an Mikrogel drastisch zu vermindern, wobei gleichzeitig der Gehalt an Peptidspaltstücken praktisch konstant bleibt. Die Viskosität der Gelatinelösung kann dadurch vermindert werden, ohne dass gleichzeitig die Erstarrungszeit wesentlich verlängert wird.

Weitere Gegenstände der Erfindung sind die verfahrensgemäss erhaltenen Gelatinen, ihre Verwendung als Bindemittel bei der Herstellung photographischer Schichten (Materialien), photographische Materialien mit mindestens einer Schicht, die als Bindemittel eine erfindungsgemässe Gelatine enthalten, sowie ihre Verwendung als Bindemittel und/oder Trägermaterialien bei der Arzneimittelherstellung und der Nahrungsmittelherstellung.

Ausser in der photographischen Industrie sind die erfindungsgemässen Gelatinen auch in der pharmazeutischen und Nahrungsmittelindustrie von besonderem Vorteil. In der pharmazeutischen Industrie werden medizinische Präparate häufig in Gelatine-Hartkapseln verpackt. Diese Hartkapseln werden in einem Tauchverfahren hergestellt, bei dem sich dann besonders gleichmässige Kapseln in reproduzierbarer Weise ergeben, wenn die Erstarrungszeit der verwendeten Gelatine sehr kurz ist. Diese Hartkapselherstellung im Tauchverfahren ist ein weiteres wichtiges Anwendungsgebiet für die erfindungsgemässe, rasch erstarrende Gelatine, wobei wegen der Möglichkeit, die Viskosität dieser Gelatine anzupassen, auch die Fliesseigenschaften in vorteilhafter Weise ausgenutzt werden können.

Entsprechendes gilt für Speisegelatine, bei der kurze Erstarrungszeiten ebenfalls höchst erwünscht sein können. Beispielsweise müssen in der Süsswarenindustrie bei der Herstellung von Marshmallows die hergestellten Schaumstränge nach etwa 30 Sekunden so weit erstarrt sein, dass sie geschnitten werden können. Während dieser Zeit läuft der Schaumstrang auf 20 bis 30 m langen Kühlbändern. Eine Verkürzung der Erstarrungszeit bringt hier eine frühere Schnittmöglichkeit und eine erhebliche Einsparung bei der Anlagengrösse mit sich. Auch bei der Herstellung von Gummibonbons führt eine Verkürzung der Erstarrungszeit zu einer Beschleunigung des Produktionsverfahrens und zu einer Einsparung an z. B. Puderkästen und Lagerraum. Desgleichen führt in der Fisch- und Fleischwarenindustrie eine Reduzierung der Erstarrungszeit der Gelatine zu einer Leistungssteigerung und einer Reduzierung der Anlagengrösse, da beispielsweise kürzere Kühltunnel eingesetzt werden können. Auch im Haushalt ist eine Gelatine mit kurzer Erstarrungszeit von Vorteil, da es beispielsweise bei der Herstellung von « Götterspeise » oder « Sülze » nicht mehr erforderlich ist, die mit Gelatinelösung gefüllten Gefässe mehrere Stunden lang in den Kühlschrank zu stellen. Die zu langsame Erstarrung

handelsüblicher Gelatinen stellte weiterhin bisher ein unüberwindbares Hindernis für die Verwendung von Gelatine bei der Herstellung von Tortenguss dar. Durch die zu langsame Erstarrung dringt die noch flüssige Gelatinelösung in den Tortenboden ein und weicht diesen auf. Für Tortenguss werden deshalb nur schnell erstarrende Geliermittel wie Pektin, Agar-Agar, Carragheene und Alginate eingesetzt. Eine Verkürzung der Erstarrungszeit erschliesst der Gelatine auch dieses Anwendungsgebiet, wobei der Ersatz der zuvor genannten Geliermittel durch Gelatine deswegen besonders vorteilhaft ist, weil jene Geliermittel, die nicht nur im Konditoreigewerbe, sondern auch in anderen Zweigen der Nahrungsmittelindustrie wegen ihrer kurzen Erstarrungszeit häufig eingesetzt werden, mit geschmacklichen und texturmässigen Nachteilen verbunden sind.

Die Gelatinekonzentration in den einzusetzenden wässrigen Gelatinelösungen kann in weiten Grenzen schwanken und ist insbesondere abhängig von der Art der Vorrichtung (Maschine), mit (in) der die Lösung behandelt werden soll. Konzentrationen von 1 bis 30 Gew.%, vorzugsweise 1 bis 20 Gew.%, Gelatine haben sich in der Regel als geeignet erwiesen.

Mit dem erfindungsgemässen Verfahren kann man z. B. eine Herabsetzung des Mikrogelgehalts auf Werte von etwa 50 bis 1 % des Mikrogelgehalts der eingesetzten Gelatine erreichen. Die Herabsetzung kann auch grösser oder kleiner sein und kann je nach dem Verwendungszweck der Gelatine gesteuert werden.

Ein Hochdruckhomogenisator im Sinne der vorliegenden Erfindung ist eine Vorrichtung, mittels welcher die zu behandelnde Gelatinelösung durch hohen hydraulischen Druck, z. B. mittels einer Pumpe durch eine enge Oeffnung gepresst wird. Eine Kolloidmühle ist eine Vorrichtung, bei welcher die zu behandelnde Gelatinelösung durch einen engen, von zwei sich entgegengesetzt bewegenden (z. B. rotierenden) Flächen begrenzten Raum geleitet wird. Eine Stiftmühle ist eine Kolloidmühle, bei welcher der Behandlungsraum durch zwei mit hoher Geschwindigkeit gegenläufig rotierende, mit Stiften besetzte, Kreisscheiben gebildet wird.

Eine Knetmaschine besteht aus einem Gefäss mit mindestens zwei meist gegeläufig rotierenden Rührelementen besonderer Bauart.

Die Gelatinelösung kann im Hochdruckhomogenisator ansatzweise in einfachem Durchlauf oder auch, z. B. zirkulationsweise, in mehreren Durchgängen behandelt werden. Die Behandlung wird im allgemeinen mit solcher Energieintensität und solange durchgeführt, bis das gewünschte Resultat erreicht wird. Die Temperatur der Gelatinelösungen soll nicht über etwa 60 °C steigen und liegt in der Regel zwischen 20 und 60 °C.

### Beispiel 1

Von einer Gelatine der Sorte A mit verhältnismässig hohem Gehalt an Mikrogelfraktion und entsprechend hoher Viskosität wird eine Probe $A_1$ in Form einer 1-%igen wässerigen Lösung bei einer Temperatur von 40 °C in neun aufeinanderfolgenden Passagen einer Hochdruckhomogenisation mit einem Druckgefälle von 200 bar unterworfen. In dem sehr engen Spalt des Homogenisators herrscht dabei eine Scherrate zwischen $10^8$ und $10^9$ Sekunden$^{-1}$ entsprechend einer Scherspannung von $10^5$ bis $10^6$ Pascal. Pro Passage wird für 1 Liter Lösung eine Durchlaufzeit von 1 Minute benötigt.

Eine weitere Probe $A_2$ derselben Gelatinesorte wird in Form einer 5-%igen wässerigen Lösung während 15 Minuten bei 40 °C durch Behandlung mit 1-normaler Salzsäure hydrolysiert.

Zusammensetzung und physikalische Eigenschaften der unbehandelten Gelatine A, sowie der beiden behandelten Proben $A_1$ und $A_2$ sind in der folgenden Tabelle 1 zusammengestellt :

Tabelle 1

| Gelatineprobe | A unbehandelt | $A_1$ hochdruckhomogenisiert | $A_2$ hydrolysiert |
|---|---|---|---|
| Peptidfraktion % | 15 | 15 | 30 |
| Mikrogelfraktion % | 8,6 | 2,0 | 2,7 |
| Viskosität cP (Lösung 5%, 40° C) | 16 | 8 | 8 |
| Erstarrungszeit (Sek.) (Lösung 1,5%, 8° C) | 49 | 50 | 77 |

Wie die Tabelle 1 zeigt, wird durch die Hochdruckhomogenisation ($A_1$) der Gehalt an Mikrogelfraktion kräftig reduziert, während der Anteil der Peptidfraktion unverändert bleibt.

Durch die hydrolytische Behandlung ($A_2$) wird der Anteil der Mikrogelfraktion ebenfalls vermindert ; gleichzeitig steigt jedoch der Anteil an Peptidfraktion aus das Doppelte.

Bei beiden Proben ist die Viskosität der Lösung auf den halben Wert gesunken. Während jedoch die erfindungsgemäss behandelte Probe $A_1$ praktisch noch die gleiche Erstarrungszeit besitzt wie die unbehandelte Probe A, ist bei der hydrolysierten Probe $A_2$ die Erstarrungszeit um über 50 % angestiegen, Dies ist eine Folge des höheren Gehaltes an nicht gelierenden Peptiden, die sich durch hydrolytische Spaltung von α-Ketten gebildet haben.

Während also bei der bekannten Methode, die Viskosität einer Gelatine durch Hydrolysebehandlung zu senken, eine starke Erhöhung des Peptidgehalts und eine entsprechende Verlängerung der Erstarrungszeit in Kauf genommen werden muss, gelingt es, durch die erfindungsgemässe Behandlung der Gelatine eine gleiche Viskositätssenkung ohne Verlängerung der Erstarrungszeit zu erreichen.

## Beispiel 2

Proben von zwei weiteren Gelatinesorten B und C, welche gegenüber der in Beispiel 1 verwendeten Gelatine einen geringeren Anfangsgehalt an Mikrogelfraktion aufweisen, werden in gleicher Weise wie im Beispiel 1 beschrieben, durch Hochdruckhomogenisation behandelt.

Zusammensetzung und physikalische Eigenschaften der Gelatinen vor und nach der Behandlung sind in der nachfolgenden Tabelle 2 wiedergegeben :

Tabelle 2

| Gelatineprobe | unbehandelt | | behandelt | |
|---|---|---|---|---|
| | B | C | $B_1$ | $C_1$ |
| Peptidfraktion % | 20 | 34 | 20 | 33 |
| Mikrogelfraktion % | 4,7 | 2,3 | 0,1 | 0,1 |
| Viskosität cP (Lösung 5 %, 40° C) | 7,8 | 6,5 | 6,0 | 5,2 |
| Erstarrungszeit (Sek.) (Lösung 1,5 %, 8° C) | 70 | 70 | 86 | 86 |

Man beobachtet bei den beiden Proben $B_1$ und $C_1$ eine starke Verminderung des Anteils an Mikrogel bei gleichbleibendem Peptidgehalt. Die dadurch hervorgerufene Senkung der Viskosität ist in beiden Fällen von einer nur verhältnismässig geringfügigen Verlängerung der Erstarrungszeit begleitet. Die Viskositätserniedrigung ist entsprechend dem geringeren Anfangsgehalt an Mikrogel weniger ausgeprägt als im Beispiel 1.

In Tabelle 3 sind die Zusammensetzungen handelsüblicher Gelatinen (Proben I bis XII) zusammengestellt, wobei a und b die Zusammensetzungen dieser Gelatinen vor und nach der Hochdruckhomogenisierung wiedergeben. Es geht aus der Tabelle hervor, dass lediglich die Mikrogele abgebaut werden und der Gehalt an Oligomeren der α-Gelatine zunimmt. Wesentlich ist, dass der Peptidgehalt kaum verändert wird.

(Siehe die Tabelle 3, Seite 7)

Tabelle 3

| Gelatine No. | I | | II | | III | | IV | | V | | VI | | VII | | VIII | | IX | | X | | XI | | XII | |
|---|---|---|---|---|---|---|---|---|---|---|---|---|---|---|---|---|---|---|---|---|---|---|---|---|
| | a | b | a | b | a | b | a | b | a | b | a | b | a | b | a | b | a | b | a | b | a | b | a | b |
| Peptide % (Spaltstücke der α-Gelatine) | 41 | 35 | 36 | 38 | 30 | 28 | 40 | 40 | 42 | 47 | 38 | 39 | 22 | 23 | 34 | 33 | 23 | 24 | 38 | 39 | 31 | 33 | 38 | 37 |
| α-Gelatine % | 18 | 21 | 22 | 23 | 25 | 26 | 16 | 17 | 9 | 10 | 19 | 19 | 37 | 36 | 20 | 17 | 23 | 22 | 29 | 28 | 30 | 29 | 22 | 24 |
| Oligomere der α-Gelatine | 39 | 44 | 40 | 39 | 42 | 46 | 42 | 43 | 44 | 43 | 42 | 42 | 39 | 41 | 43 | 50 | 52 | 54 | 32 | 32 | 38 | 39 | 39 | 39 |
| Mikrogel % (Hochpolymer) | 2,3 | 0,3 | 2,0 | 0,1 | 3,4 | 0,2 | 1,6 | 0,2 | 5,3 | 0,2 | 1,4 | 0,2 | 1,7 | 0,3 | 3,3 | 0,5 | 2,3 | 0,3 | 0,8 | 0,1 | 1,1 | 0,2 | 0,6 | 0,2 |
| Viskosität mP Lösung 6,67%: 60°C | 41 | 33 | 43 | 33 | 50 | 38 | 38 | 31 | 50 | 41 | 41 | 33 | 48 | 44 | 56 | 40 | 51 | 42 | 35 | 28 | 41 | 34 | 40 | 35 |

## Beispiel 3

In diesem Beispiel werden von verschiedenen Gelatinesorten die Erstarrungszeiten und Anschmelztemperaturen verglichen. Die letzteren, welche nach einem normierten Verfahren gemessen werden, hängen mit der Erstarrungszeit zusammen, indem sie umso tiefer sind, je länger die Erstarrungszeit ist. Wie diese sind sie von der verwendeten Gelatinekonzentration abhängig, ausserdem aber auch noch von der beim Erstarren des Gels herrschenden Temperatur. Zur Bestimmung der Anschmelztemperatur wird ein Tropfen der Gelatinelösung auf einer temperaturgeregelten Unterlage zum Erstarren gebracht und danach, durch Aufheizen der Unterlage auf eine höhere konstante Temperatur gebracht. Durch Aufblasen eines Luftstromes wird die Festigkeit des erstarrten Tropfens geprüft. Als Anschmelztemperatur gilt diejenige Temperatur, bei welcher der Tropfen irreversibel deformiert wird.

In der folgenden Tabelle 4 ist No. 1 eine unbehandelte Gelatineprobe, No. 2 dieselbe Gelatinesorte, nach dem erfindungsgemässen Verfahren hochdruckhomogenisiert und No. 3 eine handelsübliche, für photographische Zwecke geeignete Gelatinesorte mit vergleichsweise hohem Peptidgehalt.

Aus der Tabelle geht hervor, dass die Gelatine No. 1 eine kurze Erstarrungszeit und hohe Anschmelztemperatur bei gleichzeitig hoher Viskosität besitzt. Nach der Behandlung (Probe 2) ist die Viskosität stark gesunken, während Erstarrungszeit und Anschmelztemperatur nur unwesentlich verändert werden. Probe 3 besitzt eine mit der Probe 2 vergleichbare Viskosität; wegen des hohen Peptidgehaltes ist jedoch die Erstarrungszeit länger und die Anschmelztemperatur wesentlich tiefer. Die erfindungsgemässe Probe 2 ist deshalb, bei im übrigen gleichen Eigenschaften, für die technische Verarbeitung zu photographischen Materialien besser geeignet als die Probe 3.

Tabelle 4

| Gelatine No. | | 1 | | | 2 | | | 3 | | |
|---|---|---|---|---|---|---|---|---|---|---|
| Peptide (Spaltstücke der α-Gelatine) | % | 19 | | | 19 | | | 43,8 | | |
| α-Gelatine | % | 16,2 | | | 16,2 | | | 24,5 | | |
| Oligomere der α-Gelatine | % | 54,1 | | | 62,3 | | | 30,7 | | |
| Mikrogel (Hochpolymer) | % | 9,7 | | | 1,5 | | | 1,0 | | |
| Viskosität (Lösung 6,67%; 60°C) | mP | 105 | | | 67 | | | 40,3 | | |
| Erstarrungs-temperatur | °C | 5 | 10 | 15 | 5 | 10 | 15 | 5 | 10 | 15 |
| Abkühlzeit d. App. | sec. | 8 | 8 | 8 | 8 | 8 | 8 | 8 | 8 | 8 |
| Erstarrungszeit (Gelatinekonz. 3,5%) | sec. | 13 | 24 | 65 | 13 | 28 | 78 | 23 | 37 | - |
| Erstarrungszeit (Gelatinekonz. 5,2%) | sec. | 6 | 8 | 15 | 6 | 8 | 19 | 12 | 15 | 25 |
| Anschmelztemperatur (Gelatinekonz. 3,5 %) | °C | 13,4 | 11,8 | 9,5 | 11,3 | 9,3 | 7,4 | - | - | - |
| Anschmelztemperatur (Gelatinekonz. 5,2%) | °C | 20,2 | 19,7 | 18,4 | 18,9 | 18,4 | 17,0 | 18 | 16 | - |

## Beispiel 4

Eine Giesslösung, hergestellt aus 6 g Gelatine No. 1 (vgl. Beispiel 3), 1,5 g Magentafarbstoff der Formel

(101)

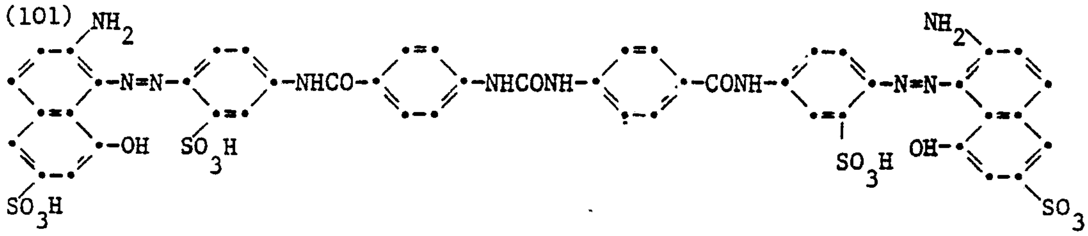

und 92,5 g Wasser, wird mit einem Vorhanggiesser auf einen Träger gegossen.

Eine gleiche Probe wird hergestellt und vergossen mit einer Giesslösung, die statt der Gelatine No. 1 die Gelatine No. 2 enthält. Das Giessgewicht beträgt in beiden Fällen 140 g/m$^2$. Die beiden Proben werden inbezug auf die nach der Trocknung resultierende Homogenität der Farbdichte verglichen. Inhomogene Farbdichte resultiert immer dann, wenn bei der jeweils angewendeten Erstarrungstemperatur und -dauer die Schichten noch nicht geliert sind und deshalb durch den beim Trocknen aufgeblasenen Luftstrom deformiert werden.

Von beiden Giesslösungen werden ausserdem Erstarrungszeit und Anschmelztemperaturen durch Laboratoriumsmessungen verglichen (Tabelle 5). Die gemessene Anschmelztemperatur bezieht sich in beiden Fällen auf eine Temperatur von 0 °C in der Erstarrungszone, bei einer relativen Luftfeuchtigkeit von 50 %.

Tabelle 5

| Gelatineprobe | 1 | 2 |
|---|---|---|
| Erstarrungszeit sec. | 22,5 | 24,5 |
| Anschmelztemperatur °C | 23 | 22,5 |

Entsprechend den ähnlichen Werten in der obigen Tabelle verhalten sich die beiden Proben bei der Maschinentrocknung unter verschiedenen Trocknungsverhältnissen (Temperatur der Trockenluft) praktisch gleich.

## Beispiel 5

Mit diesem Beispiel kann gezeigt werden, dass sich die erfindungsgemässen Gelatinen in sensitometrischer Hinsicht gleich verhalten wie handelsübliche Vergleichsgelatinen. Dazu wird eine für graphische Materialien geeignete Silberhalogenidemulsion hergestellt, indem das Silberhalogenid einmal in einer Lösung der erfindungsgemäss behandelten Gelatine No. 2, und zum Vergleich in Lösungen der handelsüblichen Gelatine No. 3, und der unbehandelten Gelatine No. 1 gefällt und anschliessend durch physikalische und chemische Reifung in üblicher Weise zur gebrauchsfertigen Emulsion weiterverarbeitet wird.

Die charakteristischen und photographisch relevanten Grössen für die beiden Emulsionen sind in der nachfolgenden Tabelle 6 wiedergegeben.

(Siehe die Tabelle 6, Seite 10)

Tabelle 6

| Bezeichnung der Emulsion | | 1 | | | | | 2 | | | | | 3 | | | | |
|---|---|---|---|---|---|---|---|---|---|---|---|---|---|---|---|---|
| Korngrösse in µ | | 0,75 | | | | | 0,75 | | | | | 0,28 | | | | |
| Verwendete Gelatine | | 1 | | | | | 2 | | | | | 3 | | | | |
| | Reifung | | | | | | | | | | | | | | | |
| $D_{min}$ / $D_{max}$ | | 0 | 0,05 | 0,1 | 0,2 | 0,3 | 0 | 0,05 | 0,1 | 0,2 | 0,3 | 0 | 0,05 | 0,1 | 0,2 | 0,3 |
| $\Delta \log E_{0,5}$ (relativ) Belichtung 20 sec; 5,5 Lux Entwicklung: 3 min., 20°C | Schwefel | 0,42 | 1,15 | 1,26 | 1,30 | 1,31 | 0,40 | 1,24 | 1,29 | 1,32 | 1,27 | 0,55 | 1,30 | 1,33 | 1,35 | 1,35 |
| Belichtung: 20 sec: 5,5 Lux Entwicklung: 3 min., 20°C | Schwefel/ Gold | 1,85 | 2,20 | 2,26 | 2,22 | 2,20 | 1,73 | 2,08 | 2,13 | 2,22 | 2,28 | 1,70 | 1,90 | 2,05 | 2,20 | 2,28 |
| Belichtung: $10^{-6}$ sec; 1 µ-Joule/$cm^2$ Entwicklung; 3 min., 20°C | Schwefel | 1,05 | 1,88 | 1,92 | 1,95 | 1,96 | 0,93 | 1,94 | 1,98 | 2,03 | 2,06 | 0,85 | 1,92 | 2,00 | 2,05 | 2,05 |
| Belichtung: 1 sec, 125 Lux Entwicklung: 35 sec., 35°C | Schwefel | 1,55 | 2,58 | 2,61 | 2,61 | 2,58 | 1,60 | 2,55 | 2,58 | 2,59 | 2,59 | 1,32 | 2,58 | 2,61 | 2,61 | 2,58 |

Die obige Tabelle zeigt, dass, abgesehen von geringfügigen Unterschieden, die von der nicht genau identischen Provenienz der beiden Gelatinen herrühren, die photographischen Eigenschaften, vor allem die relative Empfindlichkeit der beiden Emulsionen, unter gleichen Fäll- und Reifbedingungen zu sehr ähnlichen Werten führen. Dabei besitzt aber, wie im vorangehenden Beispiel 4 gezeigt, die erfindungsgemässe Emulsion wesentlich günstigere physikalische Eigenschaften.

Beispiel 6

Von einer Gelatineprobe wird eine 10 %ige Lösung hergestellt und durch Hochdruckhomogenisation erfindungsgemäss behandelt, um damit die Mikrogelfraktion zu reduzieren und die Viskosität zu senken. Die Behandlung erfolgt einmal im Batch-Verfahren mit 10 einzelnen Durchgängen und ein zweites Mal in einer ähnlichen Apparatur im Kreislaufverfahren. Nach je zwei Durchgängen, nach 10 Minuten Behandlung im Kreislauf wird je eine Probe genommen und die Viskosität bestimmt. Ausserdem werden die Anfangs- und Endwerte für Mikrogel- und Peptidgehalt gemessen. Von der gleichen Gelatineprobe wird eine 20 %ige Lösung hergestellt und ebenfalls im Kreislauf behandelt. Von den in regelmässigen Zeitabständen entnommenen Messproben wird in diesem Fall nicht nur die Viskosität, sondern auch der Gehalt an Mikrogel und Peptiden bestimmt.

Tabelle 7 : Zeitlicher Verlauf der Hochdruckhomogenisation Behandlung im Kreislaufverfahren

| Dauer | 10 %ige Gelatinelösung | | | 20 %ige Gelatinelösung | | |
|---|---|---|---|---|---|---|
| Minuten | Mikrog.% | Pept. % | Viskos.cP | Mikrog.% | Pept. % | Viskos.cP |
| 0 | 8,7*) | 20,9**) | 38,5 | 9,3*) | 19,7**) | 450 |
| 10 | --- | ---- | 34,0 | --- | ---- | --- |
| 20 | --- | ---- | 34,0 | 2,5 | 23,1 | 400 |
| 40 | --- | ---- | 30,5 | 2,2 | 23,1 | 385 |
| 60 | --- | ---- | 29,0 | 2,5 | 20,3 | 380 |
| 90 | 0,8 | 21,5 | 28,0 | 2,1 | 19,5 | 375 |
| 120 | --- | ---- | ---- | 2,0 | 19,8 | 370 |

**) Peptidfraktion : Messgenauigkeit ± 3 %
*) Mikrogelfraktion : Messgenauigkeit ± 0,5 %

Tabelle 8 : Zeitlicher Verlauf der Hochdruckhomogenisation Behandlung im Batchverfahren

| Anzahl Durchgänge | 10 %ige Gelatinelösung Viskos.cP |
|---|---|
| 0 | 38,5 |
| 2 | 35,5 |
| 4 | 33,5 |
| 6 | 33,0 |
| 8 | 32,5 |
| 10 | 32,0 |

Wie aus den Tabellen 7 und 8 hervorgeht, ist der Effekt der Behandlung beim Zirkulationsverfahren demjenigen im Einzeldurchlauf (Batchverfahren) sehr ähnlich. Die Wirkung ist bei der höher konzentrierten Lösung eher etwas ungünstiger, d. h. es müsste zur Erreichung des gleichen Endresultats etwas länger behandelt werden.

Die Konzentration der Peptidfraktion kann während der erfindungsgemässen Behandlung als ungefähr konstant angesehen werden. Dagegen ist bei der Mikrogelfraktion eine deutliche Abnahme sichtbar.

Bei der Viskosität der Lösungen, ist der Effekt der erfindungsgemässen Behandlung eindeutig.

**Ansprüche**

1. Verfahren zur Herstellung von Gelatine mit hoher Erstarrungsgeschwindigkeit und erniedrigter Viskosität durch Reduktion ihres Mikrogelgehalts ohne gleichzeitige wesentliche Erhöhung ihres Peptidgehalts, dadurch gekennzeichnet, dass man eine wässrige Gelatinelösung der Einwirkung mechanischer Scherkräfte unterwirft, wobei die Scherspannung zwischen $10^4$ und $10^8$ Pascal liegt.

2. Verfahren nach Anspruch 1, dadurch gekennzeichnet, dass die Scherspannung zwischen $10^5$ und $10^7$ Pascal liegt.

3. Verfahren nach Anspruch 1, dadurch gekennzeichnet, dass die Einwirkung der mechanischen Scherkräfte bei 20 bis 60 °C erfolgt.

4. Verfahren nach Anspruch 1, dadurch gekennzeichnet, dass die Gelatinelösung 1 bis 30 Gew.% Gelatine enthält und die Viskosität der Lösung zwischen 1 und $10^7$ mPa · s liegt.

5. Verfahren nach einem der Ansprüche 1 bis 3, dadurch gekennzeichnet, dass man die wässrige Gelatinelösung in einem Hochdruckhomogenisator behandelt.

6. Verfahren nach Anspruch 5, dadurch gekennzeichnet, dass die Viskosität der Gelatinelösung 1 bis 10 mPa · s beträgt.

7. Verfahren nach einem der Ansprüche 5 und 6, dadurch gekennzeichnet, dass man die Behandlung ansatzweise in einem Durchgang durchführt.

8. Verfahren nach einem der Ansprüche 5 und 6, dadurch gekennzeichnet, dass man die Behandlung wiederholt in mehreren Durchgängen durchführt.

9. Verfahren nach Anspruch 8, dadurch gekennzeichnet, dass man die Behandlung unter Rezirkulation so lange durchführt, bis die gewünschte Fraktionsverteilung erreicht ist.

10. Die nach den Verfahren gemäss einem der Ansprüche 1 bis 9 erhaltene Gelatine.

11. Gelatine, dadurch gekennzeichnet, dass sie einen gegenüber unbehandelter Gelatine verminderten Anteil an Mikrogel bei gleichzeitig nur unwesentlich verändertem Peptidanteil enthält.

12. Verwendung einer Gelatine nach einem der Ansprüche 10 und 11 als Bindemittel zur Herstellung photographischer Schichten.

13. Verwendung einer Gelatine nach einem der Ansprüche 10 und 11 als Trägermaterial für Arzneimittel.

14. Verwendung einer Gelatine als Trägermaterial nach Anspruch 13, dadurch gekennzeichnet, dass das Trägermaterial Kapseln sind.

15. Verwendung einer Gelatine nach einem der Ansprüche 10 und 11 bei der Herstellung von Nahrungsmitteln.

16. Photographisches Material, welches in mindestens einer Schicht als Bindemittel eine Gelatine nach einem der Ansprüche 10 und 11 enthält.

**Claims**

1. A process for the preparation of gelatin with a high setting speed and reduced viscosity by lowering its microgel content without at the same time substantially increasing its peptide content, which comprises subjecting an aqueous gelatin solution to the action of mechanical shearing forces, the shear stress being between $10^4$ and $10^8$ Pascal.

2. A process according to claim 1, wherein the shear stress is between $10^5$ and $10^7$ Pascal.

3. A process according to claim 1, wherein the action of the mechanical shearing forces takes place at 20 to 60 °C.

4. A process according to claim 1, wherein the gelatin solution contains 1 to 30 % by weight of gelatin and the viscosity of the solution is between 1 and $10^7$ mPas.

5. A process according to any one of claims 1 to 3, wherein the aqueous gelatin solution is treated in a high-pressure homogeniser.

6. A process according to claim 5, wherein the viscosity of the gelatin solution is 1 to 10 mPas.

7. A process according to either of claims 5 or 6, wherein the treatment is carried out batch-wise in one pass.

8. A process according to either of claims 5 or 6, wherein the treatment is carried out repeatedly in several passes.

9. A process according to claim 8, wherein the treatment is carried out with recirculation until the desired fraction distribution has been obtained.

10. A gelatin obtained by a process according to any one of claims 1 to 9.

11. A gelatin which, compared with untreated gelatin, contains a lowered proportion of microgel, whilst at the same time having a peptide content which is changed to only an insignificant extent.

12. The use of a gelatin according to either of claims 10 or 11 as a binder for the production of photographic layers.

13. The use of a gelatin according to either of claims 10 or 11 as carrier material for pharmaceuticals.

14. The use of a gelatin as carrier material according to claim 13, wherein the carrier material comprises capsules.

15. The use of a gelatin according to either of claims 10 or 11 in the production of foodstuffs.

16. Photographic material which contains, in at least one layer, a gelatin according to either of claims 10 or 11 as binder.

**Revendications**

1. Procédé de préparation de gélatines ayant une vitesse de solidification plus élevée et une viscosité plus basse par réduction de leur teneur en microgel sans augmenter en même temps considérablement leur teneur en peptide, caractérisé par le fait qu'on soumet une solution de gélatine à l'action de forces mécaniques de cisaillement, l'effort de cisaillement étant compris entre $10^4$ et $10^8$ Pascal.

2. Procédé selon la revendication 1, caractérisé par le fait que l'effort de cisaillement est compris entre $10^5$ et $10^7$ Pascal.

3. Procédé selon la revendication 1, caractérisé par le fait que l'influence des forces de cisaillement mécanique s'effectue à 20-60 °C.

4. Procédé selon la revendication 1, caractérisé par le fait que la solution de gélatine contient de 1 à 30 % en poids de gélatine et que la viscosité de la solution est comprise entre 1 et $10^7$ mPas.

5. Procédé selon l'une des revendications 1 à 3, caractérisé par le fait que la solution aqueuse de gélatine est traitée dans un homogénéisateur à haute pression.

6. Procédé selon la revendication 5, caractérisé par le fait que la viscosité de la solution de gélatine est de 1 à 10 mPas.

7. Procédé selon l'une des revendications 5 ou 6, caractérisé par le fait que le traitement s'effectue en un seul passage.

8. Procédé selon l'une des revendications 5 ou 6, caractérisé par le fait que le traitement est effectué en plusieurs passages.

9. Procédé selon la revendication 8, caractérisé par le fait que le traitement en cycle fermé est effectué (aussi longtemps) jusqu'à ce que la répartition de fraction désirée est atteinte.

10. Gélatine obtenue par le procédé selon l'une des revendications 1 à 9.

11. Gélatine caractérisée par le fait qu'elle contient par rapport à une gélatine non traitée une proportion moindre en microgel pour une proportion de peptides modifiée seulement de façon non essentielle.

12. Utilisation d'une gélatine selon l'une des revendications 10 et 11 comme liant pour la préparation de couches photographiques.

13. Utilisation d'une gélatine selon l'une des revendications 10 et 11 comme support pour médicament.

14. Utilisation d'une gélatine comme support selon la revendication 13, caractérisée par le fait que le support est constitué de capsules.

15. Utilisation d'une gélatine selon l'une des revendications 10 ou 11 pour la préparation d'aliments.

16. Matière photographique contenant dans au moins une couche comme liant une gélatine selon l'une des revendications 10 ou 11.